# EUROPÄISCHE PATENTSCHRIFT

(11) **EP 2 141 781 B1**
(45) Veröffentlichungstag und Bekanntmachung des Hinweises auf die Patenterteilung: **14.07.2010**
(21) Anmeldenummer: 08011018.2
(22) Anmeldetag: 18.06.2008
(51) Int. Cl.: H02J 3/38, H01H 47/22

(54) **Schaltungsanordnung mit einem bistabilen Relais zwischen einem Netz und einem Wechselrichter**
Switching device with a bistable relay between a network and an inverter
Circuit doté d'un relais bistabile entre un réseau d'énergie électrique et un onduleur

(43) Veröffentlichungstag der Anmeldung: 06.01.2010
(73) Patentinhaber: SMA Solar Technology AG, 34266 Niestetal (DE)
(72) Erfinder: Knopf, Hannes, 34119 Kassel (DE)
(74) Vertreter: Walther, Walther & Hinz GbR

(56) Entgegenhaltungen:
- EP-A- 0 807 948
- WO-A-2007/031356
- US-A- 4 257 081
- US-A1- 2003 094 858

## Beschreibung

Die Erfindung betrifft eine Schaltungsanordnung mit einem eine Erregerspule sowie Schaltkontakte umfassenden Relais, wobei die Schaltkontakte als Schaltstelle zwischen einem Netz, insbesondere einem Energieversorgungsnetz, und einem von einer Gleichspannungsquelle, insbesondere einem Photovoltaikgenerator, gespeisten Wechselrichter vorgesehen sind.

Bekannt sind speziell konzipierte Wechselrichter für Photovoltaikanlagen mit einer Halbleiterbrückenschaltung für die Einspeisung in ein Energieversorgungsnetz aus Photovoltaikgeneratoren. Ein solches Energieversorgungsnetz kann das öffentliche Netz oder ein Inselnetz sein. Der Photovoltaik-Wechselrichter sorgt dafür, dass der Gleichstrom der Quelle in einen netzkonformen Wechselstrom umgewandelt wird. Bei diesen Wechselrichtern bemüht man sich, einen sehr hohen Wirkungsgrad zu realisieren.

Derartige Wechselrichter zur Einspeisung in ein Energieversorgungsnetz unterliegen besonderen Anforderungen. So müssen Sicherheitsvorschriften eingehalten werden, die von Land zu Land variieren können. Besonders sicherheitsrelevant in fast allen Ländern ist das Wegschalten der Photovoltaikanlage, einschließlich des Generators und des Wechselrichters, vom Netz.

In beide AC-Leitungen werden üblicherweise Schalter eingesetzt. Aufgrund der Höhe des zu schaltenden Stromes und der galvanischen Trennung werden Schaltkomponenten mit Schaltkontakten, insbesondere Relais, verwendet.

Die WO 2007/031356 A1 beschreibt und zeigt eine Schaltungsanordnung mit einem eine Erregerspule sowie einen Schaltkontakt umfassenden Relais, wobei der Schaltkontakt als Schaltstelle zwischen einem Netz und einem Photovoltaikgenerator vorgesehen ist.

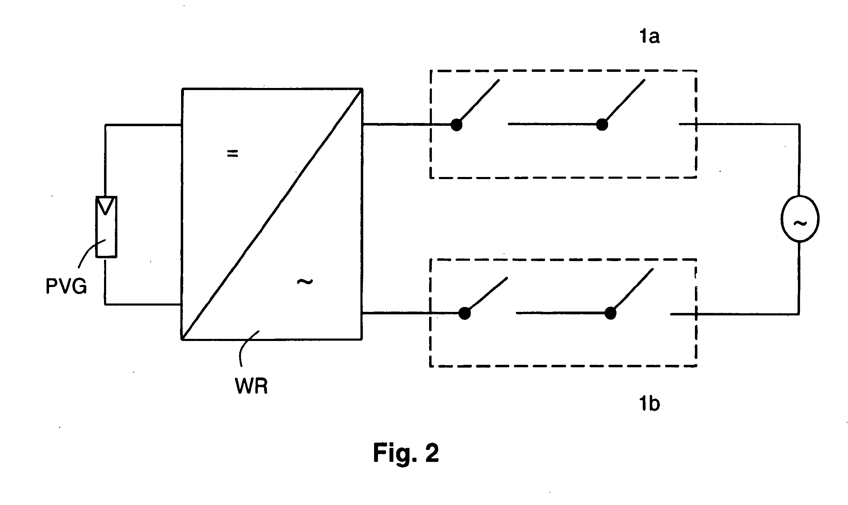

Problematisch ist, dass die Schaltkontakte der Relais unter bestimmten Umständen, z.B. durch Störungen im Netz, verschweißen bzw. verkleben können. Um dieses Sicherheitsrisiko einzuschränken, ist es bekannt, statt nur einem Relais zwei Relais einzusetzen, so dass ihre Schaltkontakte in Reihe geschaltet sind. Diese Reihenschaltung wird in Fig. 2 veranschaulicht.

Während Abmessungen und Gewicht für Photovoltaik-Wechselrichter über die Jahre weitgehend gleich geblieben sind, nehmen die möglichen Einspeiseleistungen der Wechselrichter zum Teil beträchtlich zu. Dies stellt eine neue Anforderung an die im Wechselrichter verwendeten Bauelemente. Die in den Freischaltstellen verwendeten Relais sollen platzsparend, also klein, sein und wenig Energie verbrauchen.

In herkömmlichen Wechselrichtern werden typischerweise monostabile Relais für die genannten Freischaltstellen eingesetzt.

Derartige Relais verfügen im unerregten Zustand über genau eine, fest definierte Schaltstellung. Beispielsweise ist beim Schließer-Typ der Kontakt immer geöffnet, solange kein Strom durch die Relaisspule fließt. Das Schließen erfordert dann einen permanenten Energiebedarf. Ist der Schalter überwiegend geschlossen, ist es vorteilhaft, einen Öffner-Typen einzusetzen.

Beim Öffner-Typ ist der Kontakt geschlossen, solange kein Strom durch die Relaisspule fließt. Dies hat den Nachteil, dass er im geöffneten Zustand permanent mit Strom versorgt werden muss. Damit besteht beim Öffner-Typ ein Sicherheitsrisiko. Sollte die Stromversorgung ausfallen, kann die Photovoltaik-Anlage nicht vom Netz getrennt werden.

Außerdem weisen monostabile Relais einen weiteren Nachteil auf. Für einen der beiden Schaltzustände, d.h. geöffnete oder geschlossene Schaltkontakte, ist ein permanent fließender Strom erforderlich. Dies erfordert eine entsprechend große Spule. Das Relais ist damit sehr groß und teuer.

Für Photovoltaik-Wechselrichter zur Einspeisung in ein Energieversorgungsnetz ist dies ungünstig. Derartige Wechselrichter sollten kostengünstig, klein und sicher sein und einen geringen Energieverbrauch für die Eigenversorgung aufweisen, damit der Wirkungsgrad der Anlage möglichst hoch ist.

Andererseits haben diese Relais auch Vorteile. Sie weisen eine einfache Mechanik auf, sind kostengünstig und ermöglichen einen definierten Grundzustand des Relais. Zudem ist die Ansteuerung sehr einfach. Fließt beispielsweise ein Nennstrom durch die Erregerspule, schaltet das Relais ein. Fließt kein Strom durch die Erregerspule, schaltet das Relais aus.

### Bekannt sind bistabile Relais .

Bistabile Relais genügen prinzipiell den Forderungen nach geringem Platzbedarf und geringem Energieverbrauch. Bistabile Relais benötigen nämlich lediglich einen zeitlich begrenzten Stromimpuls, um den Schaltzustand zu wechseln, in dem sie dann verbleiben. Energie ist nur für den Umschaltimpuls erforderlich. Daher verbrauchen sie wesentlich weniger Energie als monostabile Relais. Im Gegensatz zum monostabilen Relais ist kein konstanter Strom durch die Spule erforderlich, um das Relais in geöffneter oder geschlossener Position zu halten. Da kein permanenter Stromfluss stattfindet, erwärmt sich die Erregerspule nicht. Es ist nur eine kleine Spule erforderlich, wodurch das Relais selbst auch klein ist.

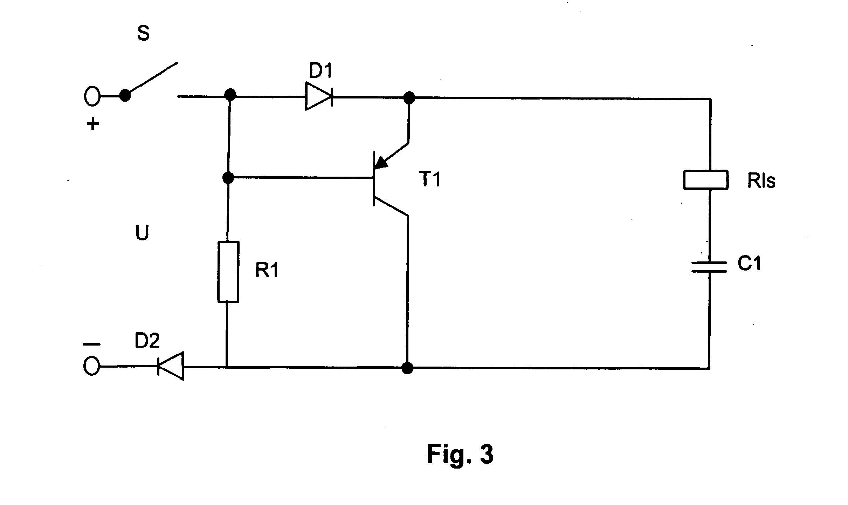

Aus der DE 2747607C3 ist eine Ansteuerschaltung bekannt, um die Vorteile bistabiler Relais, wie z.B. geringe Erregerleistung und Wegfall unnötiger Erwärmung, Thermospannungsarmut, Erhöhung der Zuverlässigkeit auch benachbarter Bauelemente und eine Temperaturkompensation der Erregerspannung, auch für monostabiles Schalten zu nutzen. In Fig.3 ist eine bekannte Anordnung dargestellt.

Durch Zuschalten einer Erregerspannung U wird das bistabile Relais Rls erregt und gleichzeitig ein Kondensator C1 aufgeladen. Das Relais Rls schaltet dann ein. Ist der Kondensator C1 aufgeladen, unterbleibt ein weiterer Stromfluss. Das Relais Rls verbleibt jedoch infolge seines bistabilen Charakters in seiner Schaltstellung. Zum Zurückschalten durch Abschalten der Erregerspannung U entlädt sich der Kondensator C1 über eine parallel zum Relais geschaltete Halbleiterstrecke mit einem Transistor T1. Das Relais Rls wird entgegengesetzt erregt und kehrt wie ein monostabiles Relais in seine Ruhelage zurück. Auf diese Weise ist es möglich, das Relais Rls mit einem Minimum an Ansteuerenergie zu betreiben.

Der Erfindung liegt die Aufgabe zugrunde, eine platz- und energiesparende Schaltstelle, insbesondere für einen Photovoltaik-Wechselrichter, unter Verwendung eines Relais bereitzustellen. Diese verbesserte Lösung soll wenige Bauelemente aufweisen. Das Relais soll sicher ausschalten, und zwar auch automatisch im Falle eines Fehlers.

Diese Aufgabe wird dadurch gelöst, dass das Relais als bistabiles Relais ausgeführt ist, wobei die Erregerspule in Reihe mit mindestens einem Schalter und einem Kondensator geschaltet ist, so dass beim Einschalten des mindestens einen Schalters der Kondensator geladen wird.

Erfindungsgemäß ist parallel zur Erregerspule ein Ladestrompfad zur Aufladung des Kondensators vorhanden.

Die Erfindung beruht auf dem Gedanken, die Aufladung des Kondensators von der Erregung des Relais zu trennen. Dazu ist in Reihe zur Erregerspule des Relais ein Schalter angeordnet. Parallel zu der Reihenschaltung aus Erregerspule und Schalter befindet sich der elektrische Strompfad bzw. Ladestrompfad, über den der Kondensator aufgeladen wird. Dadurch ist es möglich, dass der Kondensator auf eine vorgegebene Spannung aufgeladen wird, wobei der dem Relais vorgelagerte Schalter dann einschaltet. Damit fließt ein Strom durch die Erregerspule des Relais und das Relais schaltet. Dieser Vorgang findet statt, wenn das Relais, und damit die Schaltstelle zwischen dem Wechselrichter zur Einspeisung in ein Energieversorgungsnetz und dem Energienetz, schließt.

Auf die beschriebene Weise wird sichergestellt, dass schon vor dem Schließen des Relais im Kondensator ausreichend Energie gespeichert ist, um das Relais wieder umzuschalten, also auszuschalten, und damit den Wechselrichter vom Energieversorgungsnetz zu trennen. Dies ist ein wichtiger Sicherheitsaspekt für die Anwendung des Relais in der Schaltstelle.

Beim Öffnungsvorgang entlädt sich der Kondensator, so dass ein Strom über die Erregerspule und zum Beispiel über eine antiparallele Diode des in Reihe zur Erregerspule liegenden Schalters fließen kann. Der Entladestrom ist dem Aufladestrom entgegengesetzt, so dass der Drehanker des Relais kippt.

Gemäß der Erfindung ist vorgesehen, dass ein zweiter Schalter im Ladestrompfad angeordnet ist, der diesen dann unterbricht, wenn der Kondensator auf einen definierten Wert geladen ist. Der Schalter des Ladestrompfads ist vorzugsweise ein Halbleiterschalter, insbesondere ein MOSFET. Durch eine sehr einfache und verlustarme Ansteuerung des im Ladestrompfad liegenden MOSFETs ist eine definierte Abschaltung des Kondensator-Ladestroms möglich. Dadurch kann eine zum Öffnen des Relais erforderliche Energiemenge genau festgelegt und eine Bauteilüberlastung vermieden werden.

Die Erfindung nutzt das in der DE 2747607C3 erläuterte Prinzip und erweitert es um wichtige für die Photovoltaiktechnik sicherheitsrelevante Funktionen.

Die erfindungsgemäße Ansteuerschaltung für das Relais hat folgende Vorteile.

Ein Relaisanzug findet erst nach sicherer Pufferung von genügend hoher Ladung für den Abschaltvorgang statt.

Eine Begrenzung des Ladestroms auf zulässige Weise ist möglich, so dass eine Bauteilüberlastung vermieden wird.

Das Relais kann bei Einbruch der Versorgungsspannung öffnen.

Ein sicheres Öffnen bei einem plötzlichem Bauteildefekt ist möglich.

Bei der Erfindung wird ein zur Erregerspule des Relais in Reihe angeordneter Kondensator aufgeladen.

Weitere vorteilhafte Ausgestaltungen der Erfindung sind in den Unteransprüchen gekennzeichnet.

Es kann im Ladestrompfad ein Widerstand vorhanden sein. Dieser Widerstand wirkt während der Aufladephase strombegrenzend, so dass über den Widerstandswert die Höhe des Ladestroms eingestellt werden kann.

Von Vorteil ist eine Ansteuerschaltung für den im Ladestrompfad liegenden Schalter bzw. MOSFET, die derart ausgeführt ist, dass ein Ansteuersignal an dem Schalter anliegt, so dass der in Reihe zur Erregerspule angeordnete Schalter erst dann eingeschaltet wird, wenn der Kondensator auf den definierten Wert geladen ist. Das Ansteuersignal kann durch einfache Bauelemente, wie Widerstände und Dioden, gebildet werden. Das Einschalten des in Reihe zur Erregerspule angeordneten Schalters bewirkt, dass das Relais bei definierter Spannung geschlossen wird.

Insbesondere wird eine definierte Kondensatorspannung dadurch möglich, wenn wenigstens eine mit einem weiteren Schalter verbundene Zenerdiode zur Steuerung des Ladevorgangs vorhanden ist. Durch Auswahl geeigneter Zenerdioden und einem geeigneten Spannungspegel der Zenerdiode kann die Kondensatorspannung in einfacher Weise festgelegt werden.

In einer weiteren bevorzugten Ausführungsform der Erfindung wird seriell zum Schalter, der Erregerspule und dem Kondensator ein weiterer Schalter in Form eines Umschalters zum Umschalten zwischen der Versorgungsspannung und Masse angeordnet. In der Ruhestellung dieses Schalters ist die Schaltungsanordnung mit Masse verbunden. Durch Umschalten dieses Schalters wird die Schaltungsanordnung mit einer Spannung versorgt.

Günstig ist es, wenn der Umschalter in einen IC-Treiberbaustein integriert ist. In einen IC-Treiberbaustein können auch weitere Bauelemente integriert werden, so dass eine sehr kompakte Schaltung erreicht wird.

Um den Wirkungsgrad der Schaltung weiter zu verbessern, ist es zweckmäßig, dass der in Reihe mit der Erregerspule geschaltete Schalter ein Halbleiterschalter, insbesondere ein MOSFET, ist.

Eine sehr einfache Ansteuerung mit wenigen Bauelementen lässt sich realisieren, wenn parallel zum im Strompfad der Relaisspule liegenden Schalter und der Erregerspule eine Reihenschaltung, bestehend aus einem Widerstand, einem weiteren Schalter und einer Diode, angeschlossen ist.

Bei einer bevorzugten Lösung der erfindungsgemäßen Schaltungsanordnung ist in vorteilhafter Weise vorgesehen, dass der an der erwähnten Z-Diode angeschlossene Schalter ein Halbleiterschalter, vorzugsweise ein MOSFET, ist, wobei Drain und Gate dieses Schalters über einen Widerstand miteinander verbunden sind und zwischen Gate und Source eine Z-Diode geschaltet ist, und zwar so, dass ihre Kathode mit dem Gate und ihre Anode mit der Source verbunden ist. Dadurch kann ebenfalls eine für einen Abschaltvorgang wichtige definierte Kondensatorspannung realisiert werden. Eine Ansteuerung des im Relaispfad liegenden Schalters erfolgt separat durch einen weiteren Schalter, insbesondere durch einen npn-Transistor, so dass der Schalter über einen Halbleiterschalter, insbesondere den npn-Transistor, ansteuerbar ist, der über eine weitere Z-Diode ansteuerbar ist, wobei diese Z-Diode mit einem Gate eines im Ladestrompfad liegenden Schalters verbunden ist. Hierbei ist es günstig, dass der direkte Schalter der Relaisspule ein p-Kanal MOSFET ist.

Bei einer Variante der erfindungsgemäßen Schaltungsanordnung fließt ein Entladestrom des Kondensators über eine komplementäre Darlingtonschaltung bestehend aus zwei Schaltern. Die Darlingtonschaltung ist sehr verlustarm und schafft einen hohen Wirkungsgrad. Hierbei kann eine einfache Ansteuerung dadurch erfolgen, dass an einer Versorgungsspannung ein Widerstand in Reihe mit einer Diode und der Erregerspule geschaltet ist, wobei die Kathode der Diode mit dem Kollektor des ersten Schalters der Darlingtonschaltung verbunden ist.

Anstatt den im Relaispfad liegenden Schalter an einer Plusseite direkt in Reihe mit der Erregerspule anzuschließen, ist es auch alternativ möglich, dass dieser Schalter des Kondensators zwischen dem Kondensator und Erde angeordnet ist. Eine sichere Kontaktöffnung des Relais ist dadurch auch möglich.

Gegenstand der Erfindung ist ebenfalls ein Wechselrichter mit einer Schaltungsanordnung der zuvor beschriebenen Art.

Ein Ausführungsbeispiel wird anhand der Zeichnungen näher erläutert, wobei weitere vorteilhafte Weiterbildungen der Erfindung und Vorteile derselben beschrieben sind.

Es zeigen:
- Fig. 1: eine Prinzipdarstellung eines Photovoltaik-Wechselrichters, der an einem Photovoltaikgenerator angeschlossen ist und über Relaiskontakte mit einem Energieversorgungsnetz verbindbar ist;
- Fig. 2: eine Darstellung einer zu Fig. 1 vergleichbaren Anordnung, wobei jedoch mehrere Schaltkontakte in Reihe geschaltet sind;
- Fig. 3: eine Schaltungsanordnung nach dem Stand der Technik;
- Fig. 4: ein erstes Ausführungsbeispiel der erfindungsgemäßen Schaltungsanordnung, und
- Fig. 5: ein zweites Ausführungsbeispiel der erfindungsgemäßen Schaltungsanordnung.

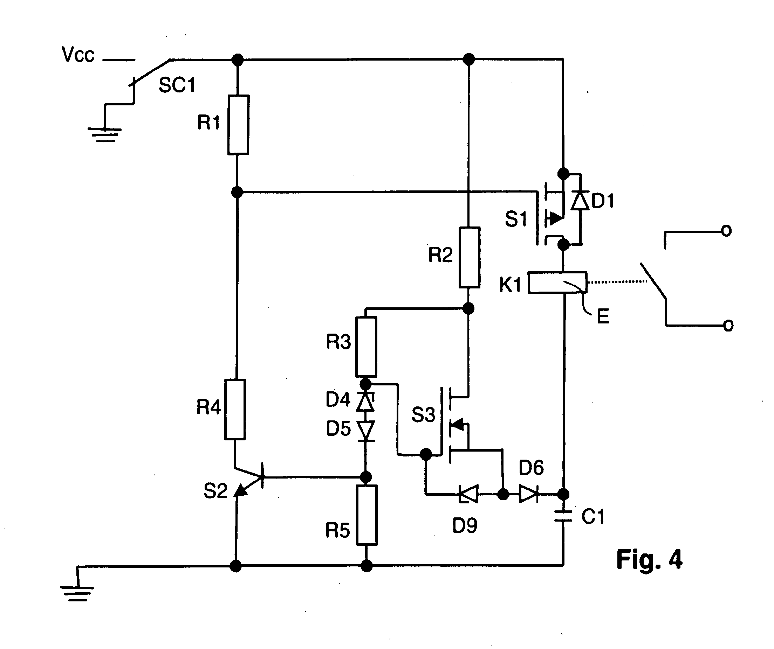

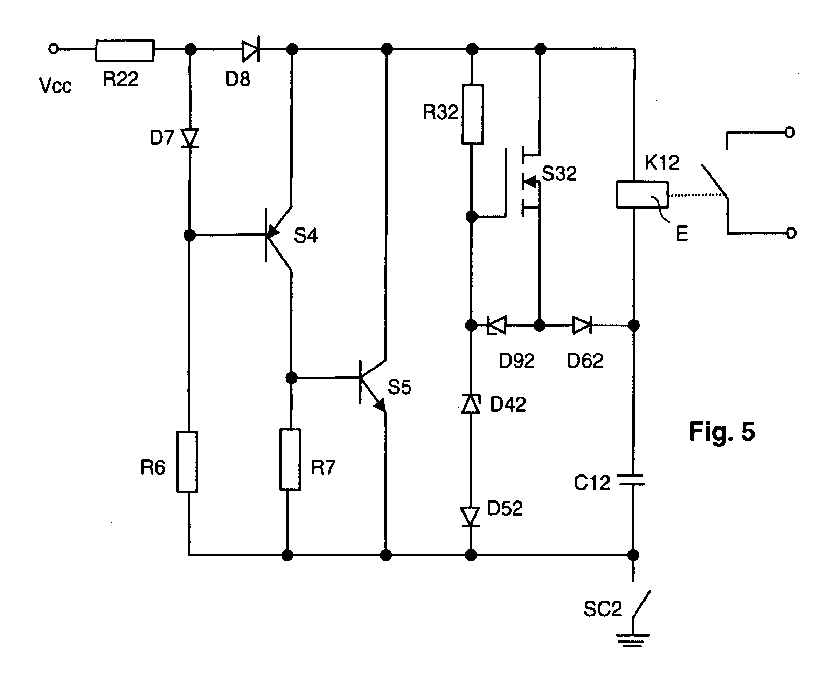

In den Figuren sind gleiche Bauteile mit denselben bzw. ähnlichen Bezugszeichen versehen. In Fig. 5 sind beispielsweise Bezugszeichen, die mit denen in Fig. 4 vergleichbar sind, zusätzlich mit dem Index "2" versehen. So entspricht beispielsweise der Widerstand R2 in Fig. 4 dem Widerstand R22 in Fig. 5.

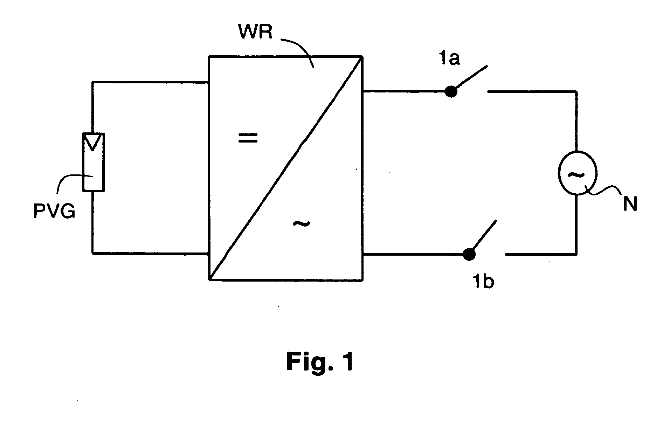

In Fig. 1 ist ein Photovoltaik-Wechselrichter WR dargestellt, der an einem Photovoltaikgenerator PVG angeschlossen ist und über Relais- bzw. Schaltkontakte 1 a, 1 b eines bistabilen Relais mit einem Energieversorgungsnetz N verbindbar ist.

Das bistabile Relais ist mit einer Ansteuerschaltung verbunden. Die Kontakte 1 a, 1 b bilden eine Schaltstelle des Wechselrichters WR für die Einspeisung in das Energieversorgungsnetz N aus dem Photovoltaikgenerator PVR. Der Photovoltaik-Wechselrichter WR wandelt die DC-Spannung des Generators PVG in einen netzkonformen Wechselstrom von z. B. 50 Hz oder 60Hz um. Anstelle eines Energieversorgungsnetzes kann auch ein Inselnetz vorhanden sein.

Die Schaltstelle ist insbesondere eine netzseitige Schaltstelle zwischen dem Wechselrichter WR und dem Netz. Die Kontakte 1 a, 1 b sind zwischen dem Wechselrichter WR und dem Netz N angeordnet. Alternativ können die Kontakte 1 a, 1 b zwischen dem Wechselrichter und dem Photovoltaikgenerator PVG angeordnet sein.

Durch diese Schaltstelle ist das Abtrennen der Photovoltaikanlage möglich, so dass Sicherheitsvorschriften eingehalten werden können.

In beiden AC-Leitungen werden Schaltkontakte 1 a, 1 b eingesetzt, so dass eine galvanische Trennung möglich ist.

Wie Fig. 2 zeigt, ist es möglich, die Schaltungsanordnung mit vier Relais, mit zwei wenigstens zwei Schaltkontakte umfassenden Relais oder mit einem wenigstens vier Schaltkontakte umfassenden Relais auszuführen. Jeweils zwei Schaltkontakte sind in Reihe geschaltet, so dass auch bei Verkleben eines Kontaktes eine galvanische Trennung gewährleistet ist.

In Fig. 4 ist ein erstes Ausführungsbeispiel der erfindungsgemäßen Schaltungsanordnung veranschaulicht. Diese Ansteuerschaltung ermöglicht den Einsatz eines bistabilen Relais. Dies ist eine bevorzugte Variante. Die Schaltungsanordnung umfasst eine Erregerspule E. Diese ist in Reihe mit einem Schalter S1 und einem Kondensator C1 geschaltet, so dass beim Einschalten des Schalters S1 der Kondensator C1 über die Erregerspule E geladen wird.

In der bevorzugten Ausführungsform nach Fig. 4 schaltet ein Umschalter SC1 zwischen der Versorgungsspannung Vcc und Masse um. In Ruhestellung ist der Umschalter SC1 mit Masse verbunden. Durch Umschalten von SC1 liegt ein erster Pfad mit einer Reihenschaltung aus den Widerständen R1, R4 und einem Schalter S2 an der Versorgungsspannung Vcc. Ein weiterer an der Versorgungsspannung anliegender, paralleler Pfad wird durch die Widerstände R2, R3, der Zenerdione D4, der Diode D5 und dem Widerstand R5 gebildet. In einem weiteren an der Versorgungsspannung Vcc anliegenden parallelen Pfad liegt die Reihenschaltung aus dem Schalter S1, der Erregerspule E und dem Kondensator C1, wobei in einem Ladepfad des Kondensators C1 eine Diode D6 angeordnet ist. Der Steuereingang des Schalters S2 liegt am Verknüpfungspunkt der Diode D5 und dem Widerstand R5. Ein Schalter S3 ist zwischen der Diode D6 und dem Widerstand R2 angeschlossen. Weiterhin ist eine antiparallele Diode D1 am Schalter S1 vorhanden.

Über den seriell angeordneten Umschalter SC1 kann zwischen Versorgungsspannung Vcc und Masse hin- und hergeschaltet werden. Der Schalter SC1 kann auch in einen Treiberbaustein, vorzugsweise einem IC, integriert sein und besteht vorzugsweise aus Halbleiterschaltern, insbesondere MOSFETs.

Parallel zum Schalter S1 und der Erregerspule E des bistabilen Relais K1 befindet sich die Reihenschaltung, bestehend aus einem Widerstand R2, einem Schalter S3 und der Diode D6.

Im Folgenden wird das Schließen des Relais K1 beschrieben.

Der Kondensator C1 ist zunächst nicht geladen. Wird die Versorgungsspannung Vcc durch Umschalten des Schalters SC1 zugeschaltet, leitet der Schalter S3.

Der Schalter S3 ist vorzugsweise ein MOSFET, wie ebenfalls in Fig. 4 gezeigt ist. Drain und Gate des Schalters S3 sind über den Widerstand R3 miteinander verbunden. Zwischen Gate und Source ist eine Z-Diode D9 geschaltet, und zwar so, dass die Kathode mit dem Gate und die Anode mit der Source verbunden ist. Diese Verschaltung bewirkt, dass bei Zuschalten der Versorgungsspannung und ungeladenem Kondensator C1 das Gate des Schalters S3 aufgesteuert wird.

Ist die Versorgungsspannung Vcc zugeschaltet, fließt ein Strom über die Reihenschaltung, bestehend aus dem Widerstand R2, dem Schalter S3, der Diode D6 und dem Kondensator C1. Der Kondensator C1 wird geladen. Die maximale Spannung über C1 entspricht dabei in etwa dem Niveau der Z-Diodenstrecke der Diode D4 zuzüglich der Flussspannung der Diode D5 abzüglich der Schwellenspannung Gate-Source des Schalters S3 und der Flussspannung der Diode D6. Die Z-Diodenspannung der Diode D4 wird dabei so hoch gewählt, dass die Ladung in C1 für den Abschaltvorgang genügt.

Ist der Kondensator C1 aufgeladen, dann ist die Gatespannung am Schalter S3 so niedrig, dass der Schalter S3 sperrt. Gleichzeitig wird der Schalter S2, vorzugsweise ein npn-Transistor, über die Z-Diode D4 aufgesteuert. Dadurch wird die Spannung am Gate von S1 negativ, und der Schalter S1 wird leitend. Der Schalter S1 ist vorzugsweise ein p-Kanal MOSFET. Damit fließt ein Strom durch die Spule vom Relais K1, so dass das Relais schalten kann.

Der Widerstand R2 wirkt während der Aufladephase strombegrenzend, d.h. über den Widerstand R2 kann die Höhe des Ladestroms eingestellt werden.

Die Diode D6 ist in Reihe zwischen Source des Schalters S3 und Kondensator C1 geschaltet, und zwar so, dass die Kathode mit dem Kondensator C1 verbunden ist. Die Diode D6 verhindert, dass der Strom während der Kondensatorentladung in den Aufladepfad fließt. Der Aufladepfad ist somit vom Entladepfad entkoppelt.

Im Folgenden wird das Öffnen des Relais K1 beschrieben.

Wird der Umschalter von der Versorgungsspannung Vcc wieder auf Masse geschaltet, dann entlädt sich der Kondensator C1. Der Entladestrom fließt über die Erregerspule E des Relais K1 und die antiparallele Diode D1 des Schalters S1. Der Stromfluss ist dem Ladestrom entgegengesetzt. Dadurch schaltet das bistabile Relais K1 in die Ausgangslage um.

Vorzugsweise wird die beschriebene Anordnung mit einem Treiberbaustein bzw. IC betrieben. Damit fließt der Entladestrom in einen treiberinternen Entladekreis.

Das Öffnen des Relais K1 erfolgt beispielsweise, wenn das Energieversorgungsnetz gestört ist, die Versorgungsspannung gestört ist oder der Wechselrichter gewartet werden soll. Geeignete Überwachungen oder manuelle Einrichtungen lösen ein Signal aus, das dazu führt, dass der Schalter SC1 auf Masse umschaltet. Auf die beschriebene Weise werden die Relaiskontakte 1 a, 1 b wieder geöffnet. Damit ist der Wechselrichter WR vom Energienetz N getrennt.

Fig. 5 zeigt eine weitere Ausführung der erfindungsgemäßen Schaltungsanordnung bzw. der Ansteuerschaltung für das bistabile Relais.

Auch in der zweiten Ausgestaltung sind die Erregerspule E des Relais K12, ein Kondensator C12 und ein Schalter SC2 in Reihe geschaltet.

Die Anordnung nach Fig. 5 unterscheidet sich von der bevorzugten Ausführung nach Fig. 4 im Wesentlichen in der Ausführung des Schalters SC2 und dem Strompfad für den Entladestrom des Kondensators C12. Der Schalter SC2 ist zwischen Kondensator C12 und Erde angeordnet. Der Entladestrom des Kondensators C12 fließt über die komplementäre Darlingtonschaltung bestehend aus zwei Schaltern S4 und S5. Der Schalter S32 des Ladestrompfads ist insbesondere ein n-Kanal MOSFET.

Im Folgenden wird das Schließen des Relais K12 beschrieben.

Die Versorgungsspannung Vcc wird über den Schalter SC2 zugeschaltet. Der Schalter SC2 ist vorzugsweise ein MOSFET. Ist der Schalter SC2 geschlossen, dann fließt ein Strom über den Widerstand R22 und den Schalter S32, so dass der Kondensator C12 geladen wird. In Reihe zu dem Widerstand R22, dem Schalter S32, dem Kondensator C12 und dem Schalter SC2 sind ebenfalls eine Diode D8 und eine Diode 62 geschaltet.

Die Diode D8 ist mit ihrer Anode mit dem Widerstand R22 verbunden. Die Kathode ist verknüpft mit dem Kollektor des Schalters S4. Die Diode D8 verhindert beim Entladevorgang des Kondensators C12 einen Stromfluss über den Widerstand R22 und über D7, um das saubere Aufsteuem der Darlingtonschaltung zu gewährleisten.

Die Diode 62 ist in Reihe zwischen der Source des Schalters S32 und dem Kondensator C12 geschaltet, und zwar so, dass die Kathode mit dem Kondensator C12 verbunden ist. Die Diode D62 verhindert, dass der Strom während der Kondensatorentladung in den Aufladepfad fließt. Der Aufladepfad ist somit vom Entladepfad entkoppelt.

Der Widerstand R22 wirkt ebenfalls während der Aufladephase strombegrenzend, d.h. über R22 kann die Höhe des Ladestroms eingestellt werden.

Das Niveau der Kondensatorspannung, die sich mit dem Aufladevorgang einstellt, richtet sich nach dem gewählten Pegel der Z-Diode D42 zuzüglich der Flussspannung von D52. Der Kondensator C12 wird zunächst auf diesen Pegel, abzüglich der Schwellenspannung Gate - Source des Schalters S32 und der Flussspannung von D62, geladen, dann sperrt sich der Schalter S32 selbst. Der Schalter S32 ist vorzugsweise ein MOSFET.

Sperrt der Schalter S32, fließt ein Strom über die Erregerspule von K12 und der Drehanker kippt. Das Relais ist geschlossen.

Im folgenden wird das Öffnen des Relais K12 beschrieben.

Ist der Schalter SC2 geöffnet, dann ist der Ladestromkreis unterbrochen. Die Basis des pnp-Transistors S4 nimmt über die Widerstände R6 und R7 Emitterniveau an. Die komplementäre Darlingtonschaltung, bestehend aus den Schaltern S4 und S5 wird leitend. Dadurch wird der Kondensator C12 über die Erregerspule von K12 entladen. Der Drehanker des Relais kippt und das Relais ist geöffnet.

Die Kondensatorladung C1 bzw. C12 genügt nach definierter Vorladung in jedem Fall für die Öffnung der Relaiskontakte 1 a, 1 b bei erwünschter bzw. notwendiger Netztrennung.

Die Erfindung ist nicht auf diese Beispiele beschränkt. So kann der Schalter SC2 auch zwischen der Versorgungsspannung VCC und R22 angeordnet sein. Es können auch Schaltungsmerkmale der Schaltung in Fig. 4 durchaus mit Merkmalen der Schaltung gemäß Fig. 5 kombiniert werden. Beispielsweise kann der Schalter SC2 in Position vor R22 als Umschalter zwischen der Versorgungsspannung VCC und Masse ausgeführt sein.

Unter Relais sind auch vergleichbare Schaltgeräte oder Schaltkomponenten mit Schaltkontakten, wie zum Beispiel ein Schütz, zu verstehen.

### BEZUGSZEICHENLISTE

- PVG: Photovoltaikgenerator
- WR: Wechselrichter
- N: Netz

- S: Schalter
- T: Transistor
- R: Widerstände
- Rls: Relais (Stand der Technik)
- C: Kondensator
- D: Dioden
- K: Relais
- E: Erregerspule

- Vcc: Versorgungsspannung

- 1 a: erster Schaltkontakt
- 1 b: zweiter Schaltkontakt

## Patentansprüche

1. Schaltungsanordnung mit einem eine Erregerspule (E) sowie einen Schaltkontakt (1a, 1b) umfassenden Relais (K1; K12), wobei der Schaltkontakt (1a, 1b) als Schaltstelle zwischen einem Netz, insbesondere einem Energieversorgungsnetz (N), und einem von einer Gleichspannungsquelle, insbesondere einem von einem Photovoltaikgenerator (PVG) gespeisten Wechselrichter (WR), vorgesehen ist,
**dadurch gekennzeichnet,**
**dass** das Relais (K1; K12) als bistabiles Relais ausgeführt ist,
**dass** die Erregerspule (E) in Reihe mit mindestens einem Schalter (S; SC1 und S1; SC2) und einem Kondensator (C1; C12) geschaltet ist, so dass beim Einschalten des mindestens einen Schalters (S; SC1 und S1; SC2) der Kondensator (C1; C12) geladen wird,
**dass** parallel zur Erregerspule (E) ein Ladestrompfad zur Aufladung des Kondensators (C1; C12) vorhanden ist, und
**dass** ein zweiter Schalter (S3; S32) im Ladestrompfad angeordnet ist, der diesen dann unterbricht, wenn der Kondensator (C1; C12) auf einen definierten Wert geladen ist.

2. Schaltungsanordnung nach Anspruch 1,
**gekennzeichnet durch**
eine Ansteuerschaltung, die derart ausgeführt ist, dass wenigstens eine mit einem weiteren Schalter (S3, S32) verbundene Zenerdiode (D4, D9; D92, D42) zur Steuerung des Ladevorgangs des Kondensators (C1; C12) vorhanden ist.

3. Schaltungsanordnung nach Anspruch 1 oder 2,
**gekennzeichnet durch**
eine Ansteuerschaltung, die derart ausgeführt ist, dass ein Ansteuersignal an dem Schalter (S1) anliegt, so dass der in Reihe zur Erregerspule (E) angeordnete Schalter (S1) erst dann eingeschaltet wird, wenn der Kondensator (C1) auf den definierten Wert geladen ist.

4. Schaltungsanordnung nach einem der Ansprüche 1 bis 3,
**dadurch gekennzeichnet,**
**dass** seriell zum Schalter (S1), der Erregerspule (E) und dem Kondensator (C1) ein Umschalter (SC1) zum Umschalten zwischen einer Versorgungsspannung (Vcc) und Masse angeordnet ist.

5. Schaltungsanordnung nach Anspruch 4,
**dadurch gekennzeichnet,**
**dass** der in Reihe mit der Erregerspule (E) geschaltete Umschalter (SC1) in einen IC-Treiberbaustein integriert ist.

6. Schaltungsanordnung nach einem der Ansprüche 3 bis 5,
**dadurch gekennzeichnet,**
**dass** parallel zum Schalter (S1) und der Erregerspule (E) eine Reihenschaltung, bestehend aus einem Widerstand (R2), einem weiteren Schalter (S3) und einer Diode (D6), angeschlossen ist.

7. Schaltungsanordnung nach den Ansprüchen 2 bis 6,
**dadurch gekennzeichnet,**
**dass** der Schalter (S1) über einen Halbleiterschalter, insbesondere einen npn-Transistor (S2), ansteuerbar ist, der über eine weitere Z-Diode (D4) ansteuerbar ist, wobei diese Z-Diode (D4) mit einem Gate eines im Ladestrompfad liegenden Schalters (S3) verbunden ist.

8. Schaltungsanordnung nach den Ansprüchen 2 bis 7,
**dadurch gekennzeichnet,**
**dass** der Schalter (S1) ein p-Kanal MOSFET ist.

9. Schaltungsanordnung nach einem der vorhergehenden Ansprüche, **dadurch gekennzeichnet,**
**dass** der in Reihe mit der Erregerspule (E) geschaltete Schalter (SC2) ein Halbleiterschalter, insbesondere ein MOSFET, ist.

10. Schaltungsanordnung nach Anspruch 9,
**dadurch gekennzeichnet,**
**dass** parallel zur Erregerspule (E) eine Reihenschaltung, bestehend aus einem weiteren Schalter (S32) und einer Diode (D62), angeschlossen ist.

11. Schaltungsanordnung nach einem der vorhergehenden Ansprüche, **gekennzeichnet durch**
eine Ausführung derart, dass ein Entladestrom des Kondensators (C12) über eine komplementäre Darlingtonschaltung bestehend aus zwei Schaltern (S4, S5) fließt.

12. Schaltungsanordnung nach Anspruch 11,
**dadurch gekennzeichnet,**
**dass** an einer Versorgungsspannung (Vcc) ein Widerstand (R22) in Reihe mit einer Diode (D8) und der Erregerspule (K12) geschaltet ist, wobei die Kathode der Diode (D8) mit dem Kollektor des ersten Schalters (S4) der Darlingtonschaltung verbunden ist.

13. Schaltungsanordnung nach einem der vorhergehenden Ansprüche,
**dadurch gekennzeichnet,**
**dass** der an der Z-Diode (D6; D62) angeschlossene Schalter (S3; S32) ein Halbleiterschalter, vorzugsweise ein MOSFET, ist, wobei Drain und Gate dieses Schalters (S3; S32) über einen Widerstand (R3; R32) miteinander verbunden sind und zwischen Gate und Source eine Z-Diode (D9; D92) geschaltet ist, und zwar so, dass ihre Kathode mit dem Gate und ihre Anode mit der Source verbunden ist.

14. Wechselrichter,
**gekennzeichnet durch**
eine Schaltungsanordnung gemäß einem oder mehrerer der vorangehenden Ansprüche.

## Claims

1. Circuit arrangement with a relay (K1, K12), which comprises an excitation coil (E) as well as a switching contact (1 a, 1 b), wherein the switching contact (1 a, 1 b) is provided as a switching point between a mains, particularly an energy supply mains (N), and a DC-AC converter (WR), which is supplied by a direct voltage source, particularly by a photovoltaic generator (PVG), **characterised in that** the relay (K1, K2) is constructed as a bistable relay, that the excitation coil (E) is connected in series with at least one switch (S; SC1 and S1; SC2) and a capacitor (C1; C12) so that when the at least one switch (S; SC1 and S1; SC2) is switched on the capacitor (C1; C12) is charged, that a charging current path for charging the capacitor (C1; C12) is present in parallel with the excitation coil (E) and that a second switch (S3; S32) is arranged in the charging current path and interrupts this when the capacitor (C1; C12) is charged to a defined value.

2. Circuit arrangement according to claim 1, **characterised by** an actuating circuit which is constructed in such a manner that at least one Zener diode (D4, D9; D92, D42), which is connected with a further switch (S3, S32), for control of the charging process of the capacitor (C1; C12) is present.

3. Circuit arrangement according to claim 1 or 2, **characterised by** an actuating circuit which is so constructed that an actuating signal is applied to the switch (S1) so that the switch (S1) arranged in series with the excitation coil (E) is switched on only when the capacitor (C1) is charged to the defined value.

4. Circuit arrangement according to any one of claims 1 to 3, **characterised in that** a change-over switch (SC1) for changing over between a supply voltage (Vcc) and ground is arranged in series with the switch (S1) the excitation coil (E) and the capacitor (C1).

5. Circuit arrangement according to claim 4, **characterised in that** the change-over switch (SC1) connected in series with the excitation coil (E) is integrated in an integrated-circuit driver module.

6. Circuit arrangement according to any one of claims 3 to 5, **characterised in that** a series circuit consisting of a resistor (R2), a further switch (S3) and a diode (D6) is connected in parallel with the switch (S1) and the excitation coil (E).

7. Circuit arrangement according to claims 2 to 6, **characterised in that** the switch (S1) is actuable by way of a semiconductor switch, particularly an npn-transistor (S2), which is actuable by way of a further Zener diode (D4), wherein this Zener diode (D4) is connected with a gate of the switch (S3) disposed in the charging current path.

8. Circuit arrangement according to any one of claims 2 to 7, **characterised in that** the switch (S1) is a p-channel MOSFET.

9. Circuit arrangement according to any one of the preceding claims, **characterised in that** the switch (SC2) connected in series with the excitation coil (E) is a semiconductor switch, particularly a MOSFET.

10. Circuit arrangement according to claim 9, **characterised in that** a series circuit consisting of a further switch (S32) and a diode (D62) is connected in parallel with the excitation coil (E).

11. Circuit arrangement according to any one of the preceding claims, **characterised by** such a construction that a discharging current of the capacitor (C12) flows by way of a complementary Darlington circuit consisting of two switches (S4, S5).

12. Circuit arrangement according to claim 11, **characterised in that** a resistor (R22) is connected with a supply voltage (Vcc) in series with a diode (D8) and the excitation coil (K12), wherein the cathode of the diode (D8) is connected with the collector of the first switch (S4) of the Darlington circuit.

13. Circuit arrangement according to any one of the preceding claims, **characterised in that** the switch (S3; S32) connected with the Zener diode (D6; D62) is a semiconductor switch, preferably a MOSFET, wherein drain and gate of this switch (S3; S32) are connected together by way of a resistor (R3; R32) and a Zener diode (D9, D92) is connected between gate and source and in particular so that the cathode thereof is connected with the gate the anode thereof with the source.

14. DC-AC converter, **characterised by** a circuit arrangement according to one or more of the preceding claims.

## Revendications

1. Circuit comprenant un relais (K1, K12) qui comporte une bobine magnétisante (E) et un contact d'interruption (1 a, 1 b), dans lequel le contact d'interruption (1 a, 1 b) est prévu comme point de couplage entre un réseau, en particulier un réseau d'alimentation en énergie (N), et un onduleur (WR) alimenté par une source de tension continue, en particulier par un générateur photovoltaïque (PVG), **caractérisé en ce que**
le relais (K1; K12) est constitué par un relais bistable,
la bobine magnétisante (E) est connectée en série avec au moins un interrupteur (S; SC1 et S1; SC2) et un condensateur (C1; C12) de telle manière que, lors de la fermeture de l'au moins un interrupteur (S; SC1 et S1; SC2), le condensateur (C1; C12) soit chargé,
il est prévu, en parallèle avec la bobine magnétisante (E), une voie de courant de charge pour la charge du condensateur (C1 ; C12), et dans la voie de courant de charge, est disposé un deuxième interrupteur (S3; S32) qui interrompt cette voie lorsque le condensateur (C1; C12) est chargé à un niveau défini.

2. Circuit selon la revendication 1,
**caractérisé par**
un circuit d'excitation qui est constitué de telle sorte qu'il y soit prévu au moins une diode Zener (D4, D9; D92, D42) reliée à un autre interrupteur (S3, S32) et prévue pour la commande du processus de charge du condensateur (C1; C12).

3. Circuit selon la revendication 1 ou 2,
**caractérisé par**
un circuit d'excitation qui est constitué de telle sorte qu'un signal d'excitation soit appliqué à l'interrupteur (S1) afin que l'interrupteur (S1) connecté en série avec la bobine magnétisante (E) ne soit fermé que lorsque le condensateur (C1) est chargé à un niveau défini.

4. Circuit selon l'une des revendications 1 à 3,
**caractérisé en ce que**
un inverseur (SC1), destiné à inverser entre une tension d'alimentation (Vcc) et la masse, est connecté en série avec l'interrupteur (S1), la bobine magnétisante (E) et le condensateur (C1).

5. Circuit selon la revendication 4,
**caractérisé en ce que**
l'inverseur (SC1), connecté en série avec la bobine magnétisante (E), est intégré dans un composant d'attaque à circuit intégré.

6. Circuit selon l'une des revendications 3 à 5,
**caractérisé en ce que**
un circuit série composé d'une résistance (R2), d'un autre interrupteur (S3) et d'une diode (D6) est connecté en parallèle avec l'interrupteur (S1) et la bobine magnétisante (E).

7. Circuit selon les revendications 2 à 6,
**caractérisé en ce que**
l'interrupteur (S1) peut être commandé par l'intermédiaire d'un interrupteur à semi-conducteur, en particulier d'un transistor npn (S2), qui peut être commandé par l'intermédiaire d'une autre diode Zener (D4), cette diode Zener (D4) étant reliée à la grille d'un interrupteur (S3) intercalé dans la voie de courant de charge.

8. Circuit selon les revendications 2 à 7,
**caractérisé en ce que**
l'interrupteur (S1) est un MOSFET à canal p.

9. Circuit selon l'une des revendications précédentes, **caractérisé en ce que**
l'interrupteur (SC2), connecté en série avec la bobine magnétisante (E), est un interrupteur à semi-conducteur, en particulier un MOSFET.

10. Circuit selon la revendication 9,
**caractérisé en ce que**
un circuit série composé d'un autre interrupteur (S32) et d'une diode (D62), est connecté en parallèle avec la bobine magnétisante (E).

11. Circuit selon l'une des revendications précédentes, **caractérisé par**
une réalisation telle qu'un courant de décharge du condensateur (C12) s'écoule à travers un circuit Darlington complémentaire composé de deux interrupteurs (S4, S5).

12. Circuit selon la revendication 11,
**caractérisé en ce que**
une résistance (R22), en série avec une diode (D8) et avec la bobine magnétisante (K12), est connectée à une tension d'alimentation (Vcc), la cathode de la diode (D8) étant reliée au collecteur du premier interrupteur (S4) du circuit Darlington.

13. Circuit selon l'une des revendications précédentes, **caractérisé en ce que**
l'interrupteur (S3; S32) connecté à la diode Zener (D6; D62) est un interrupteur à semi-conducteur, de préférence un MOSFET, le drain et la grille de cet interrupteur (S3; S32) étant reliés l'un à l'autre à travers une résistance (R3; R32), et une diode Zener (D9 ; D92) est connectée entre la grille et la source de telle manière que sa cathode soit connectée à la grille et son anode à la source.

14. Onduleur,
**caractérisé par**
un circuit selon l'une ou plusieurs des revendications précédentes.
